# NEW EUROPEAN PATENT SPECIFICATION

(11) **EP 0 370 540 B2**
(45) Date of publication and mention of the opposition decision: **15.11.1995**
(45) Mention of the grant of the patent: 04.03.1992
(21) Application number: 89202585.9
(22) Date of filing: 12.10.1989
(51) Int. Cl.: F24F 3/12, B64D 13/00, B01D 53/34

(54) **Device for removal of ozone from and simultaneously moistening of air**
Vorrichtung zur Beseitigung von Ozon aus Luft bei gleichzeitiger Befeuchtung von Luft
Appareil pour elimination d'ozone et humidification de l'air simultanées

(30) Priority: 14.10.1988 NL 8802542
(43) Date of publication of application: 30.05.1990
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: Temmink, Hermanus Maria Gerardus, NL-7326 GE Apeldoorn (NL)
(74) Representative: Flamman, Han

(56) References cited:
- WO-A-81/01250
- DE-A- 1 937 574
- DE-A- 2 851 474
- DE-A- 3 101 618
- DE-A- 3 409 991
- DE-C- 2 617 985
- DE-C- 2 703 892
- DE-C- 2 929 615
- DE-C- 3 522 182
- FR-A- 2 098 858
- US-A- 4 381 267

## Description

It is well known that ozone (O₃) in air, by inhaling this air, can be harmful to people. We find ozone in relatively high concentrations, for instance in air which is suck into planes which fly at an altitude of about 10 km. Furthermore, this air is very dry. This leads to concentration-failures and symptoms of disease among staff and passengers. Further we find high concentrations of ozone for instance in processes by which ozone is used as an oxidant, like for instance in water-treatment plants.

Purpose of the invention now is to supply a device in or with which in an easy and efficient way ozone is removed from air and at the same time the air is moistened.

Such devices are known. For instance in the German "Offenlegungsschrift" no. 2851474 is described the device in which air, to be purified from O₃, is led through a porous layer which offers a large surface, covered with a substance which promotes the conversion of O₃ to O₂ in a catalytic process.

Disadvantage of such a process is, that after a certain time of use, the layer, included the cover-layer, gets contaminated. It then has to be replaced, which leads to undesired interruptions in the use of the device. A further disadvantage is the comparatively high costs of catalysts.

In the German "Offenlegungsschrift" no. 3101618 also there is described a way of converting the ozone in air - which before has been created by means of ultraviolet radiation - into oxygen. Also there, the conversion is realised by means of a catalyst.

From DE-A-1937574 it goes, that the conversion of O₃ into O₂ is realised by using carbon.

Carbon has the property to relatively easy converse O₃ into O₂. Thereto carbon provides the so called "active sites"; these are sites where two O₃ molecules can react to O₂, according to the reaction: 2 O₃ --> 3 O₂. Disadvantage of this method also is contamination: the carbon must be regenerated periodically and finally is released as waste product.

Carbon has the property to relatively easy converse O₃ into O₂. Thereto carbon provides the so called "active sites"; these are sites where two O₃ molecules can react to O₂, according to the reaction: 2 O₃ --> 3 O₂. Disadvantage of this method also is contamination: the carbon must be regenerated periodically and finally is released as waste product.

The invention relates to a device for the removal of ozone from air and for moistening air, comprising means to make the air flow along one surface of a substance and means to conduct along the opposite surface of the substance a medium which in the form of a vapour diffuses through the said substance and in which, in the substance, the conversion of ozone into oxygen takes place. Characterizing feature is that the substance along which the ozone-rich air is led, is a hydrophobic micro-porous membrane, inside which the conversion of ozone into oxygen takes place, with a porosity of equal to or over 10% and a pore-diameter of between 0,01 and 0,5 µm and that the medium is water. When working with this device, ozone is found in the membrane, where it is conversed, in the so-called active sites, into oxygen. To obtain a compact system it is necessary that many active sites per volume-unit are being offered. For that purpose water vapour is brought into the membrane and the membrane has to meet the said demands as to pore-diameter and porosity.

The number of active sites is increased by having at the back of the membrane water which stimulates the conversion of ozone into oxygen: the required water vapour originates from it. This water can be stationary or can be flowing. Although other media than water may be used to reach the goal set, water has the characteristic that together with increasing the number of active sites in the form of vapour it diffuses through the membrane and comes in the air current at the other side of the membrane, so that the humidity content of the air can be regulated: controlled moistening. The membrane and the water will have to be adjusted to each other, such that the water - without overpressure - does not permeate through the membrane, but that only in the form of a vapour it may diffuse through it. To that end the membrane is hydrophobic.

Obviously, a device according to the invention will only work when the air to be purified flows relatively close along the membrane and has a certain minimum rate of flow. Experimentally it has been found that it is preferred that the air-current flows through a channel with a diameter of preferably 1.2 mm, with a speed of preferably 3 m/sec, along a porous membrane with a porosity of preferably 75% and a pore-diameter of preferably 0.2 µm.

Such a device very well at the same time may serve as a moistener of air. The material of the membrane being hydrophobic prevents it from being moistened by the water. Then only the water vapour and not the water as such can pass through the membrane: the thus moistened air does not contain waterdrops.

The degree in which air is moistened is regulated by the flow-rate of the air, led along the membrane. At a lower flow-rate, the air will be moistened more than it would be at a higher flow-rate. When the flow-rate is low, the air is contained above the membrane for a relatively long period, and the amount of water vapour which diffuses to a certain amount of air, will increase.

An illustrating and preferred example of a device for the moistening of air, and simultaneously for the removal of ozone, contains a membrane with a porosity of, for example, 75% and a pore-diameter of, for example, 0.2 µm, means to conduct water along the one side of the membrane and means to let air flow at the other side of the membrane. The water that is conducted along the membrane will on the one hand stimulate the active sites in the membrane, and on the other hand moisten the air by diffusion of water vapour through the membrane.

Especially compact is a device for the moistening of air and simultaneously removing of ozone, with the characterizing feature that the membrane is formed by the wall(s) of one or more hollow fiber(s), by which the air flows through the lumen of the fiber(s), and the medium is present, either stationary or flowing, at the exterior - the shell side - of the fiber(s), or where the air flows at the exterior of the fiber(s) and the medium is present, either stationary or flowing, in the lumen of the fiber(s). By using the hollow fiber-membranes, the ratio: active surface/volume, becomes very favorable, so that it is possible to construct a very compact device.

Experimentally it was proved that another device according to the invention, has a membrane-wall with a thickness of preferably 0.3 µm, the membrane having a porosity of preferably 75% and a pore-diameter of 0.2 µm, preferably has an internal fiber-diameter of 1.2 µm and preferably having the air flowing through the lumen of the fiber.

### Illustrative example.

Through the lumen of a polypropylene hollow fiber with a porosity of 1.2 mm, a pore-diameter of 0.2 µm, a porosity of 75%, a wall-thickness of 0.3 µm, and a fiber-length of 10 cm, dry air is led with a velocity of 3 m/s and an ozone content of 96 µg/kg of air (ppb). When leaving the fiber the ozone content is decreased to 18 µg/kg (ppb) and the humidity content is increased to 11.8 g/kg of air.

A further illustration will be given by means of the drawings which provide schematic, illustrating examples of a device according to the invention.
Fig.1 schematically shows a section of a device in its generality;
Fig.2 shows a preferred embodiment of the device: the hollow fiber membrane-module.

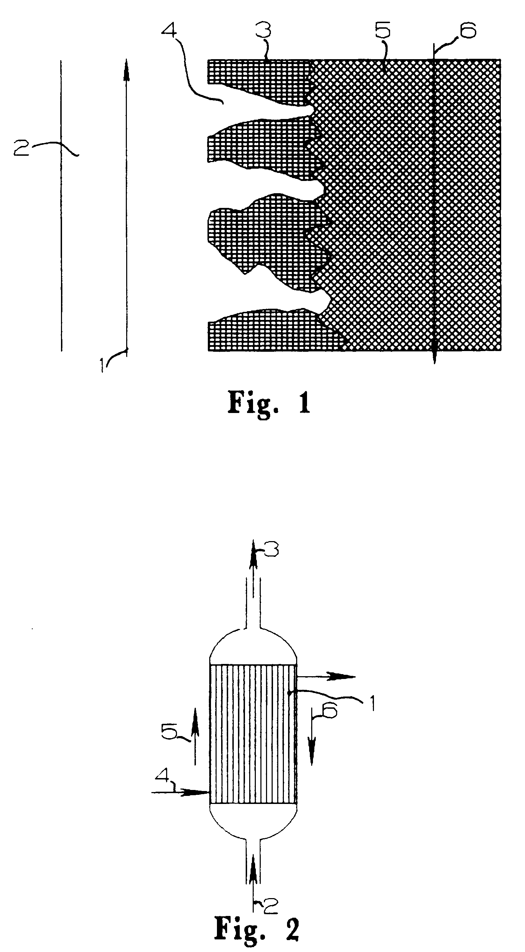

In Fig.1 is shown the ozone-containing rate of air, flowing through the air-conducting chamber [2] along a membrane [3] with pores [4]. Behind the membrane is the medium [5], for example water. This water can be present stationary but can also flow in, for example, direction [6].

In the device according to Fig.2 the membrane [1] forms the wall of a hollow fiber. The air to be freed from ozone and if desired to be moistened [2], flows in direction [3], through the lumen of the fiber. At the exterior of the fiber, a current moves from medium [4] (water) through the shell-side of the optional module in direction [5] or [6].

## Claims

1. A device for the removal of ozone from air, and for moistening air, comprising means to make the air flow along one surface of a substance and means to conduct along the opposite surface of the substance a medium which in the form of a vapour diffuses through the said substance and in which, in the substance, the conversion of ozone into oxygen takes place,
characterized in that the substance is a micro-porous, hydrophobic membrane, with a porosity of equal to or over 10% and a pore-diameter of between 0,01 and 0,5 µm and that the medium is water.

2. A device according to claim 1,
characterized in that the membrane is formed by the wall(s) of one or more hollow fiber(s), where the air flows through the lumen of the fiber(s) and the medium is present either stationary or flowing at the shell-side of the fiber(s), or that the air flows through the shell-side of the fiber(s) and the medium is present either stationary or flowing in the lumen of the fiber(s).

3. A device according to claim 2,
characterized in that the membrane-wall has a thickness of 0.3 µm, that the membrane has a porosity of 75% and a pore-diameter of 0.2 µm, that the internal fiber-diameter is 1.2 µm and that the air flows through the lumen of the fiber.

## Patentansprüche

1. Eine Vorrichtung zur Beseitigung von Ozon aus der Luft, und zur Befeuchtung von Luft, bestehend aus Mitteln, die die Luft entlang der einen Oberfläche einer Substanz strömen lassen und Mitteln, die über die gegenüberliegende Oberfläche der Substanz einen Stoff leiten, der in der Form von Dampf durch besagte Substanz diffundiert und in welcher Substanz die Umwandlung von Ozon in Sauerstoff stattfindet,
dadurch gekennzeichnet, daß die Substanz eine mikroporöse, hudrophobe Membran mit einer Porosität von 10% oder mehr und einem Durchmesser der Poren zwischen 0,01 und 0,5 µm ist und daß der Stoff Wasser ist.

2. Eine Vorrichtung gemäß Anspruch 1,
dadurch gekennzeichnet, daß die Membran von der Wand oder den Wänden von einer oder mehreren hohlen Faser(n) gebildet wird, wobei die Luft durch das Innere der Faser(n) strömt und der Stoff entweder still steht oder an der Außenseite der Faser(n) entlang strömt, oder aber die Luft an der Außenfläche der Faser(n) entlang strömt und der Stoff im Innern der Faser(n) entweder still steht oder strömt.

3. Eine Vorrichtung gemäß Anspruch 2,
dadurch gekennzeichnet, daß die Wand der Membran eine Dicke von 0,3 mm hat, daß die Membran eine Porosität von 75% und einen Durchmesser der Poren von 0,2 µm aufweist, daß der innere Durchmesser der Faser 1,2 mm ist und daß die Luft durch den inneren Hohlraum der Faser fließt.

## Revendications

1. Un appareil pour enlever l'ozone de l'air et pour humidifier l'air, comprenant un dispositif pour diriger l'air le long d'une surface d'une substance et un dispositif pour conduire le long de la surface opposée de la substance un medium qui sous la forme d'une vapeur se diffuse à travers cette substance, la transformation d'ozone en oxygène ayant lieu dans la substance,
caractérisé en ce que la substance est une membrane microporeuse, hydrophobe, avec une porosité supérieure ou égale à 10% et des pores d'un diamètre compris entre 0,01 et 0,5 µm et que le medium est de l'eau.

2. Un appareil d'après la revendication 1,
caractérisé en ce que la membrane est formée par la ou les parois d'une ou de plusieurs fibres creuses par où l'air s'écoule à travers le lumen de la ou des fibres, le medium se trouvant, mobile ou en mouvement, à l'extérieur de la ou des fibres; ou bien l'air s'écoulant à l'extérieur de la ou des fibres, le medium étant, mobile ou en mouvement, dans le lumen de la ou des fibres.

3. Un appareil d'après la revendication 2,
caractérisé en ce que la membrane-paroi est d'une épaisseur de 0,3 mm, la membrane ayant une porosité de 75% et des pores d'un diamètre de 0,2 µm, le diamètre interne des fibres étant de 1,2 mm et l'air s'écoulant par le lumen de la fibre.
